# FASCICULE DE BREVET EUROPEEN

(11) **EP 2 041 503 B1**
(45) Date de publication et mention de la délivrance du brevet: **21.11.2018**
(21) Numéro de dépôt: 07804000.3
(22) Date de dépôt: 09.07.2007
(51) Int. Cl.: F25D 3/10, A01N 1/02

(54) **DISPOSITIF DE CRYOPRÉSERVATION À SEC DE PRODUITS, NOTAMMENT D'ÉCHANTILLONS DE MATIÈRE BIOLOGIQUE.**
VORRICHTUNG ZUR KONSERVIERUNG VON PRODUKTEN, VOR ALLEM BIOLOGISCHER PROBEN, MITTELS GEFRIERTROCKNUNG
DEVICE FOR DRY CRYOPRESERVATION OF PRODUCTS, IN PARTICULAR OF SAMPLES OF BIOLOGICAL MATERIAL

(30) Priorité: 19.07.2006 FR 0606565
(43) Date de publication de la demande: 01.04.2009
(73) Titulaire: Cryo Diffusion, 27690 Lery (FR)
(72) Inventeur: ALONSO, Jean-Paul, F-91360 Villemoisson-sur-orge (FR)
(74) Mandataire: Dossmann, Gérard
(86) Numéro de dépôt international: PCT/FR2007/051622
(87) Numéro de publication internationale: WO 2008/009840

(56) Documents cités:
- EP-A- 1 475 587
- EP-A1- 1 087 193
- WO-A-01/09557
- FR-A- 2 533 304
- US-A- 2 552 832
- US-A- 5 309 722
- US-A- 6 044 648

## Description

L'invention concerne le domaine de la cryopréservation de produits, en particulier d'échantillons de matière biologique.

Plus particulièrement, l'invention se rapporte à la cryopréservation à sec de tels produits.

La cryopréservation fait appel à la cryogénie et consiste ainsi à conserver des produits à des températures inférieures à -150 °C en utilisant un gaz liquéfié.

Les dispositifs de cryopréservation de produits comprennent généralement un récipient, par exemple à double paroi, et une source de fluide cryogénique, en l'espèce de l'azote liquide, qui communique, par l'intermédiaire de systèmes de valves et de régulation de niveau, avec le volume interne du récipient.

Dans le but d'isoler thermiquement l'intérieur du récipient de l'air ambiant, l'espace entre les deux parois est généralement empli d'un isolant thermique ou peut être sous vide.

Enfin, un couvercle vient recouvrir l'extrémité supérieure ouverte du récipient.

A l'usage, le volume interne du récipient est rempli d'azote liquide, et est donc maintenu à une température de l'ordre de -196 °C.

Les échantillons de matière à conserver sont directement placés dans l'azote liquide.

Comme on le conçoit, ce type de dispositif présente un inconvénient majeur dans la mesure où un produit immergé dans le fluide cryogénique peut venir contaminer les autres produits ou les produits placés ultérieurement dans le récipient. Il a en effet été démontré que le liquide cryogénique peut être un vecteur de contamination.

En effet, un produit préalablement préservé dans le récipient est susceptible d'avoir contaminé le fluide cryogénique, lequel vient alors, à son tour, contaminer un produit ultérieurement disposé dans le réservoir.

C'est la raison pour laquelle les fabricants de dispositifs de cryopréservation tendent à développer des cryoconservateurs à sec afin d'éviter tout contact entre les produits et le fluide cryogénique.

Lors de la mise en oeuvre d'une cryopréservation à sec, les échantillons de matière à conserver sont disposés dans un compartiment placé dans un récipient empli de fluide cryogénique. Le compartiment est réalisé en matériau conducteur thermiquement de sorte que les produits sont conservés en relation d'échange thermique avec le fluide cryogénique, mais comporte des parois étanches de manière à éviter tout contact direct avec le fluide cryogénique.

On pourra à cet égard se référer au document WO 01/09557 qui décrit un dispositif de cryopréservation à sec de produits comprenant une triple paroi, à savoir une paroi interne délimitant intérieurement une chambre interne de stockage des produits, une paroi intermédiaire, délimitant avec la paroi interne une chambre intermédiaire emplie de fluide cryogénique liquéfié, et une paroi externe constituant le carter du dispositif.

Selon cet agencement, la chambre délimitée par les parois interne et intermédiaire forme un volume clos raccordé à une source d'alimentation en fluide cryogénique et associé à des moyens de régulation de niveau.

Dans le but d'éviter des surpressions, la paroi interne est pourvue d'évents positionnés de manière à permettre une circulation de la phase gazeuse du fluide cryogénique de la chambre intermédiaire vers la chambre interne du récipient dans lequel sont stockés les produits à conserver.

Bien que permettant de conserver des échantillons de produits tout en évitant les contamination entre échantillons, ce type de dispositif présente également des inconvénients majeurs, notamment en raison du fait que des dysfonctionnements au sein du régulateur de niveau sont susceptibles de provoquer une élévation du niveau du fluide cryogénique liquéfié dans la chambre intermédiaire, puis un déversement du liquide dans la chambre interne à travers les évents, de sorte qu'il n'est pas possible, à coup sûr, d'éviter tout risque de contamination entre les produits.

En outre, la chambre interne n'est pas adaptée pour éviter tout risque de contact entre les produits conservés.

Enfin, il existe un risque de réchauffement trop important des échantillons placés dans l'enceinte, lors de l'ouverture, au risque de compromettre l'intégrité et la bonne conservation du contenu. D'autres dispositifs de cryopréservation sont connus des documents EP 1087193 A et US 2552832 A.

Le but de l'invention est donc de pallier les inconvénients liés à l'utilisation des dispositifs de cryopréservation selon l'état de la technique et donc de proposer un dispositif de cryopréservation à sec de produits, notamment d'échantillons de matière biologique, capable d'éviter tout risque de contamination entre les produits conservés, en supprimant tout risque d'écoulement du fluide cryogénique liquéfié vers le récipient dans lequel sont conservés les produits.

Un autre but de l'invention est de fournir un tel dispositif de cryopréservation de produits, qui soit en outre capable de permettre une manipulation aisée des produits stockés, aussi bien lors de leur insertion dans le réservoir que lors de leur extraction et ce, dans un agencement simple et peu coûteux.

L'invention a donc pour objet un dispositif de cryopréservation à sec de produits, comprenant un récipient délimitant intérieurement un volume destiné à être empli d'un fluide cryogénique et des compartiments destinés à recevoir les produits et comprenant chacun une paroi périphérique étanche pour le stockage des produits à l'abri du fluide cryogénique.

Selon une caractéristique générale de ce dispositif, les compartiments s'étendent à partir d'une zone de fond du récipient et comportent une extrémité supérieure ouverte rendant accessible les produits.

Ils comportent en outre un système de trop-plein apte à éviter une élévation du niveau du fluide cryogénique jusqu'à l'extrémité supérieure ouverte des compartiments.

Ainsi, grâce à l'utilisation des compartiments à extrémité supérieure ouverte, il est particulièrement aisé de disposer et d'extraire les produits à conserver. En outre, grâce à la structure étanche de la paroi des compartiments, les produits sont conservés sans contact direct avec le fluide cryogénique.

Enfin, grâce à l'utilisation du système de trop-plein, on évite tout risque d'écoulement du fluide cryogénique à l'intérieur des compartiments, même en cas de défaillance du système de régulation de niveau.

Selon une autre caractéristique de l'invention, le système de trop-plein comporte un tube muni d'une première extrémité débouchant à travers la paroi périphérique du récipient à un niveau inférieur à celui de l'extrémité ouverte des compartiments, et d'une deuxième extrémité débouchant à l'extérieur du dispositif.

Le dispositif selon l'invention comporte en outre des moyens de remplissage du récipient en fluide cryogénique.

Par exemple, ces moyens de remplissage comportent une source de fluide cryogénique, un tube de remplissage débouchant à l'intérieur du récipient pour alimenter ledit récipient à partir de la source de fluide cryogénique, et des moyens de régulation du niveau du fluide cryogénique.

Avantageusement, le tube de remplissage débouche dans le fond du récipient. De préférence, le tube se prolonge à l'intérieur du récipient par une partie de tube pourvue de passages de distribution de fluide répartis selon la longueur du tube.

Dans un mode de réalisation, les moyens de régulation comportent des moyens de mesure du niveau de fluide et des moyens de calcul adaptés pour réguler le niveau du fluide autour d'au moins une valeur de seuil.

Selon encore une autre caractéristique de l'invention, le dispositif comporte en outre une paroi externe délimitant une enceinte dans laquelle est placé le récipient.

Par exemple, le récipient comporte un épaulement monté sur une extrémité supérieure ouverte de la paroi externe.

Le dispositif selon l'invention comporte en outre un couvercle de fermeture pourvu d'un bord périphérique venant en appui contre le récipient et comprenant une partie centrale en saillie s'insérant en position fermée dans une partie supérieure du récipient.

Dans un mode de réalisation, le récipient comporte un double fond et comporte une plaque de fond rapportée sur laquelle sont fixés les compartiments.

Par exemple, la plaque de fond est rapportée par vissage.

Selon encore une autre caractéristique de l'invention, les compartiments sont constitués par des bacs étanches.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 illustre une vue en coupe d'un dispositif de cryopréservation à sec de produits conforme à l'invention ; et
- la figure 2 est une vue de dessus du récipient du dispositif de la figure 1.

Le dispositif de cryopréservation illustré sur la figure annexée est destiné au stockage à sec d'échantillons de matière biologique.

Il comporte un axe géométrique général X-X' situé dans une position supposée verticale.

Un tel dispositif est particulièrement adapté pour conserver à très basse température, c'est-à-dire à des températures inférieures à -150 °C, des échantillons de tous types de matières biologiques, telles que du sang, de la moelle osseuse, du sperme, ...

On notera toutefois que l'invention s'applique, de manière générale, à la cryopréservation de tous types de produits qui doivent être stockés à très basse température, et pour lesquels il convient d'éviter tout risque de contamination.

Comme on le voit sur la figure, le dispositif, désigné par la référence numérique générale 1, comporte une double paroi, à savoir une paroi interne 2, qui constitue un récipient de stockage des produits, et une paroi externe 3.

Par exemple, le dispositif a une forme générale cylindrique, indifféremment à base carrée ou ronde. On notera toutefois que l'on ne sort pas du cadre de l'invention lorsque le dispositif adopte toute autre forme.

Par exemple, la paroi externe 3 est réalisée en acier inoxydable ou en acier au carbone peint.

Tel est également le cas de la paroi interne 2 qui peut être réalisée en acier inoxydable ou en acier au carbone peint.

Comme on le voit sur la figure, le récipient interne, dans lequel sont stockés les produits à conserver, comporte un fond 4 et une paroi périphérique 5 dressée à partir du fond 4. L'extrémité supérieure de la paroi périphérique 5 comporte un épaulement 6, en saillie radiale vers l'extérieur, monté sur un bord supérieur rentrant prévu à l'extrémité supérieure de la paroi externe 3.

Ainsi, le récipient interne 2 est suspendu dans le volume interne de la paroi 3, en étant maintenu par son épaulement supérieur 6.

L'extrémité supérieure du récipient est ouverte et peut être fermée par un couvercle 20.

Le récipient interne 2 est doté, intérieurement, d'un certain nombre de compartiments C1, C2, C3 et C4, ici au nombre de quatre, mais dont le nombre peut être adapté en fonction du nombre de produits et de types de produit à conserver.

Comme cela sera décrit en détail par la suite, chaque compartiment est destiné à recevoir au moins un rack dans lequel sont stockés des produits à conserver dans le dispositif. Par exemple, on dispose plusieurs racks dans un bac C1, C2, C3 ou C4 étanche.

Chaque compartiment C1, C2, C3 ou C4 comporte un fond 7 et une extrémité supérieure ouverte. Il comporte une paroi périphérique 8 étanche à contour fermé dressée à partir du fond 7 et s'étendant vers le haut, c'est-à-dire vers l'extrémité ouverte du récipient.

Comme on le voit sur la figure, dans un mode de réalisation, les compartiments C1, C2, C3 et C4 ne sont pas fixés directement sur le fond de la paroi interne 2 mais sont fixés sur un faux fond F rapporté, dimensionné de manière à s'insérer à l'intérieur du récipient de stockage délimité par la paroi interne 2.

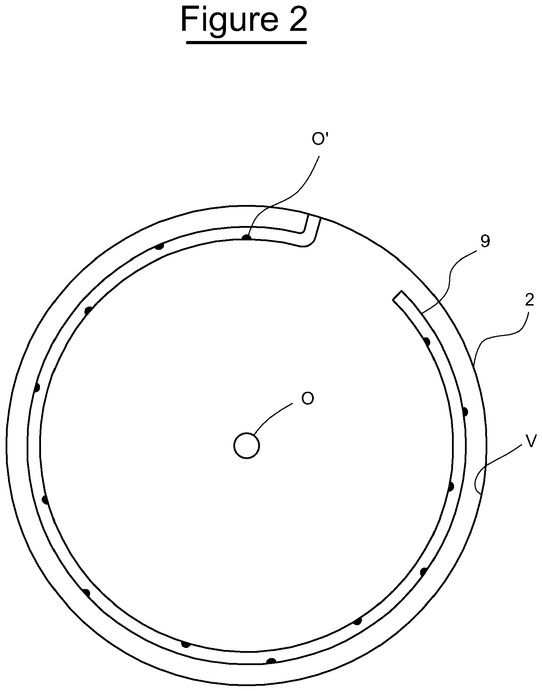

Le faux fond F est alors fixé sur le fond de la paroi interne 2 par vissage au moyen d'un pion central P fileté s'insérant dans un orifice O pratiqué dans le fond du récipient (figure 2) et repose sur le fond de la paroi interne 2 par des pions latéraux P'.

Le faux fond F monté sur la paroi interne constitue ainsi un plateau fixe, dont la rotation est empêchée par serrage obtenu par vissage.

Mais on pourrait également, en variante, prévoir de monter les compartiments directement sur le fond de la paroi interne 2. On notera toutefois que l'utilisation du faux fond F permet l'utilisation d'un même réservoir pour différents types de cryoconservation, à savoir stockage en phase liquide, stockage en phase gazeuse ou stockage sec.

La paroi périphérique 8 de chaque compartiment est par exemple réalisée en acier inoxydable ou en aluminium. L'aluminium est avantageux dans la mesure où il conduit le froid efficacement en partie supérieure du réservoir, et où il est moins onéreux que l'inox.

Les compartiments C1, C2, C3 et C4 baignent dans un fluide cryogénique emplissant le récipient 2.

Dans l'exemple de réalisation envisagé, le fluide cryogénique est constitué par de l'azote liquide L.

De préférence, les compartiments sont agencés et disposés dans le récipient de manière à autoriser une circulation d'azote liquide entre les compartiments.

A cet effet, le dispositif est pourvu d'un système de remplissage S qui comporte une source d'azote liquide A, un tube de remplissage 9 et un dispositif de régulation de niveau comprenant un système de valve V piloté par un calculateur C dûment programmé de manière à contrôler le niveau d'azote liquide dans le récipient.

Comme représenté, le tube de remplissage comporte une première extrémité supérieure 10 raccordable à la source d'azote liquide par l'intermédiaire du système de valve V. Cette première extrémité traverse la paroi externe 3 au voisinage de son extrémité supérieure. Le tube de remplissage chemine entre les parois interne 2 et externe 3 jusqu'au fond du récipient au niveau duquel il entre en communication fluidique avec le volume interne du récipient 2. Ainsi, en fonctionnement, l'azote liquide est délivré au niveau du fond du récipient, ce qui permet, à l'usage, de reliquéfier les phases gazeuses susceptibles d'être délivrées par la source d'azote liquide.

Comme le montre la figure 2, une fois rentré dans l'enceinte intérieure, le tube de remplissage parcourt une partie de son périmètre, par exemple, comme représenté, sur un angle d'environ 330 degrés. Au niveau de sa partie située à l'intérieur du récipient de stockage, le tube de remplissage est pourvu d'un certain nombre d'ouies O' réparties le long du tube. Avantageusement, ces ouvertures sont dirigées vers le fond de la paroi 2 et vers une virole périphérique V prévue dans le fond du récipient, qui assurent ainsi le rôle de déflecteur. Cette solution permet, comme on le conçoit, d'éviter l'apparition de vagues au niveau de la surface supérieure de l'azote liquide L et d'éviter des bouillonnements lors du remplissage. Ceci permet d'obtenir une régulation précise du niveau du liquide.

Comme on le voit, le dispositif est par ailleurs pourvu de sondes de détection de niveau 12, 13, 14 et 15 qui sont positionnées de manière à respectivement détecter un niveau minimum admissible, un niveau de seuil inférieur, un niveau de seuil supérieur et un niveau maximum admissible. Toutefois, on positionnera la sonde supérieure 12 à un niveau inférieur à celui de l'extrémité ouverte des compartiments, ou d'un compartiment ayant l'extrémité inférieure la plus basse.

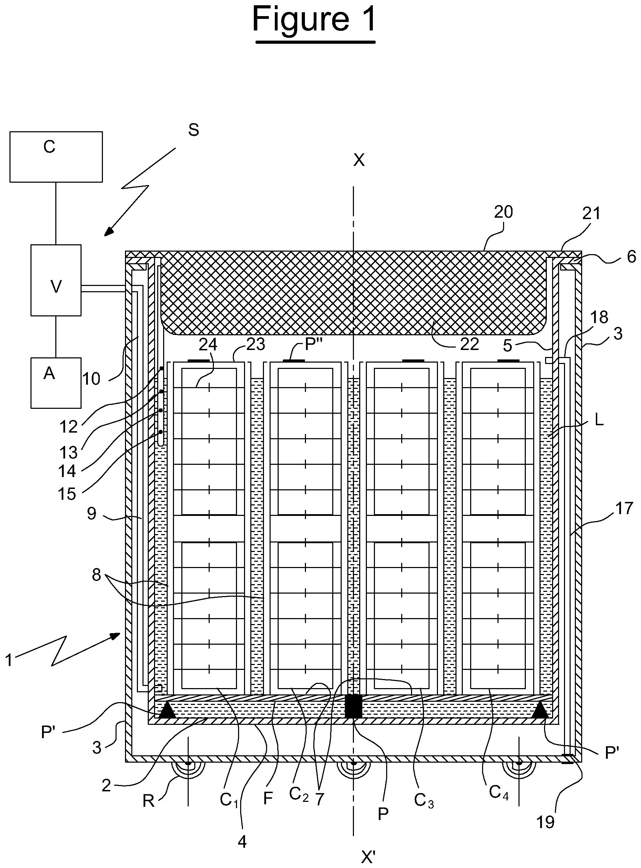

Comme on le voit sur la figure 1, les sondes de détection sont relativement proches, ce qui permet d'obtenir une régulation du niveau du liquide L relativement précise. C'est également la raison pour laquelle il est souhaitable d'éviter l'apparition de vaguelettes à la surface du liquide L pour éviter de contrarier la régulation du niveau.

Ces sondes sont en effet raccordées, de manière connue en soi, au dispositif de régulation C afin, comme cela est classique, de provoquer le remplissage du réservoir interne 2, par exemple lorsque le niveau atteint le niveau de seuil inférieur, qui correspond au niveau détecté par la sonde désignée par la référence 14 ou, au contraire, arrêter le remplissage, lorsque le niveau atteint le niveau de seuil supérieur, qui correspond au niveau détecté par la sonde désignée par la référence 13 ou encore, émettre des signaux d'alarme lorsque le niveau atteint les valeurs extrêmes basse et haute, correspondant aux niveaux détectés par les sondes référencées 15 et 12, respectivement.

Ainsi, grâce au dispositif de régulation de niveau, le niveau d'azote liquide dans le réservoir interne est maintenu autour d'un niveau prédéfini et, en tout état de cause, est maintenu à un niveau inférieur à l'extrémité supérieure ouverte 16 des compartiments.

Toutefois, afin d'éviter tout risque d'écoulement d'azote liquide à l'intérieur des compartiments, le dispositif est complété par un système de trop-plein, qui constitue un système anti-débordement, et qui comporte un tube de trop-plein 17 prévu entre les parois interne et externe. Ce système fonctionne conjointement avec le dispositif de régulation de niveau et constitue un système de sécurité supplémentaire qui agit en cas de dysfonctionnement du dispositif de régulation.

Dans l'exemple de réalisation décrit, le tube de trop-plein comporte une première extrémité 18 supérieure qui débouche à l'intérieur du récipient 2 à un niveau inférieur à l'extrémité ouverte 16 de chaque récipient ou, à un niveau inférieur à l'extrémité ouverte du compartiment ayant la plus faible hauteur.

Par exemple, le niveau auquel débouche l'extrémité ouverte 18 du tube de trop-plein 17 se situe au niveau maximum admissible, c'est-à-dire au même niveau que la sonde supérieure 12, de manière à émettre un signal d'alarme si le niveau atteint le système de trop-plein.

On peut également, comme représenté, positionner l'extrémité supérieure 18 à un niveau légèrement inférieur à celui de la sonde supérieure 12 afin d'émettre un signal d'alarme si, par extraordinaire, le trop plein ne suffisait pas pour éviter l'élévation du niveau d'azote liquide.

Le tube de trop-plein 17 comporte par ailleurs une extrémité inférieure 19 qui débouche vers l'extérieur du dispositif, à travers le fond du carter, en étant équipée d'un clapet anti-retour 19.

Comme on le voit, le dispositif est complété par le couvercle 20. Pour des raisons de poids, ce couvercle est avantageusement réalisé en matière plastique, par exemple en mousse de polyuréthane recouverte d'une peau de polycarbonate.

Ce couvercle 20 comporte un épaulement périphérique 21 qui vient reposer, à l'état fermé, contre l'épaulement 6 du récipient interne 2, ainsi qu'une partie interne en saillie 22, de forme générale cylindrique complémentaire de celle du récipient 2 pour venir s'insérer, en position fermée, dans le récipient, en partie supérieure de celui-ci.

De préférence, l'épaulement périphérique est localement interrompu ou comporte un passage radial assurant une communication entre l'intérieur du récipient interne 2 et l'extérieur pour constituer un évent de dégazage autorisant l'établissement d'un flux de vapeur vers l'extérieur lors du remplissage.

Dans le but de procurer une assistance à l'ouverture, le couvercle 20 peut être équipé de systèmes télescopiques ou de servomécanismes qui procurent une assistance à l'opérateur au cours de l'ouverture.

Le dispositif est encore complété par des roulettes, telles que R, permettant de faciliter son déplacement.

Il a été constaté que grâce à l'invention, les échantillons stockés au sein du dispositif pouvaient être conservés, en permanence, à des températures inférieures à -180 °C, même lorsque le couvercle est ouvert.

En effet, les mécanismes qui règlent les échanges thermiques entre l'extérieur et l'intérieur du réservoir sont essentiellement la conduction solide, la convection, la conduction moléculaire et le rayonnement.

Selon une caractéristique de l'invention, les échantillons sont disposés dans des racks placés à l'intérieur de compartiments qui sont fixés sur la plaque de fond, lesquels sont refroidis à -196 °C par l'azote liquide. Le fond et le rack sont donc le siège d'une conduction thermique. En plus, une circulation d'azote liquide intervient entre les compartiments. Par ailleurs, dans ce type de réservoir à pression atmosphérique, l'azote liquide se vaporise de sorte qu'il se crée une circulation de vapeur à l'intérieur du réservoir. Les vapeurs refroidissent les échantillons stockés.

Contrairement à l'état de la technique, la majorité de l'enceinte intérieure est emplie de liquide, seule une phase gazeuse étant présente, en partie supérieure, entre la surface du liquide et le couvercle, lorsqu'il est en position fermée. Cette phase gazeuse est également présente dans les compartiments entre la paroi de chaque compartiment et le rack qui est inséré.

Les vapeurs ont une chaleur spécifique de 1,08 J/gK. Par contre, l'azote liquide a une température stable car toute la chaleur absorbée contribue à la vaporisation, la chaleur latente de vaporisation du liquide étant égale à 198,97 J/gK. Cela signifie qu'en cas d'entrée massive de chaleur, comme pendant une ouverture du couvercle, la chaleur introduite réchauffe les vapeurs et vaporisent du liquide à la surface.

En d'autres termes, à l'ouverture, une masse de vapeur à très basse température créée reste confinée en partie supérieure entre l'extrémité supérieure des compartiments et l'extrémité supérieure, alors ouverte, du récipient 2, et entre la paroi de chaque compartiment et le rack qui y est inséré, empêchant une baisse de température dans les racks.

Selon l'invention, la surface du liquide étant relativement importante, et le récipient étant majoritairement empli de phase liquide, l'azote liquide ne subit que peu de réchauffement. Ceci implique que, grâce également à la circulation d'azote liquide entre les compartiments, la température des parois des compartiments est maintenue à une température de l'ordre de -196 °C.

Par conséquent, les vapeurs qui refroidissent les échantillons dans les compartiments sont constamment maintenues à de très basses températures grâce au maintien des parois des compartiments à -196 °C.

On notera que, même dans la partie supérieure du réservoir, c'est-à-dire au voisinage de l'ouverture du récipient, la grande surface liquide obtenue grâce au dispositif selon l'invention, permet de générer une grande quantité de phase gazeuse, ce qui permet un refroidissement rapide des vapeurs chaudes entrantes. On évite ainsi tout risque d'endommagement des échantillons même pendant des ouvertures accidentelles du couvercle.

L'invention qui vient d'être décrite, qui utilise un récipient pourvu d'un ensemble de compartiments à parois étanches ayant une extrémité ouverte, dans lesquels sont placés des produits à conserver, et qui baignent dans un fluide cryogénique L, permet une cryopréservation des produits en évitant tout risque de contamination.

En outre, grâce à l'utilisation du système de trop-plein, on évite tout risque d'écoulement de l'azote liquide à l'intérieur des compartiments.

Par ailleurs, la réalisation à double paroi du dispositif permet de réaliser un dispositif de cryopréservation à coût réduit, contrairement aux dispositifs selon l'état de la technique qui peuvent être pourvus, en outre, d'une troisième paroi.

Enfin, grâce à l'agencement des compartiments, qui comportent chacun une extrémité ouverte, l'opération de manipulation des produits, aussi bien pour leur insertion que pour leur extraction des compartiments, est grandement facilitée.

On notera que, pour le stockage des produits dans les compartiments, tous types de moyens appropriés peuvent être utilisés.

On notera toutefois que, comme indiqué précédemment, de préférence, on utilisera un système de racks, par exemple en aluminium, ces racks venant s'insérer par coulissement à l'intérieur des compartiments pour insérer ou extraire simultanément l'ensemble des produits contenus par un rack.

Comme représenté, chaque rack, tel que 23, est constitué par exemple un boîtier fermé, par exemple parallélépipédique, qui est pourvu d'une paroi mobile pour son chargement en produits et d'un ensemble de support 24 internes, par exemple sous la forme d'étagères. Ce boîtier est destiné à s'insérer selon un mouvement de translation dans un compartiment, une poignée P" pouvant être prévue en partie supérieure pour faciliter sa préhension.

## Revendications

1. Dispositif de cryopréservation à sec de produits, comprenant un récipient (2) délimitant intérieurement un volume destiné à être empli d'un fluide (F) cryogénique liquéfié et des compartiments (C1, C2, C3, C4) destinés à recevoir les produits et comprenant chacun une paroi périphérique étanche pour le stockage des produits à l'abri du fluide cryogénique liquéfié, dispositif dans lequel les compartiments s'étendent à partir d'une zone de fond (4) du récipient et **caractérisé en ce qu'**ils comportent une extrémité supérieure (16) ouverte rendant accessible les produits, et **en ce que** le dispositif comporte un système de trop-plein (17) apte à éviter une élévation du niveau de fluide cryogénique liquéfié jusqu'à l'extrémité supérieure ouverte (9) des compartiments.

2. Dispositif selon la revendication 1, **caractérisé en ce que** le système de trop-plein comporte un tube (17) muni d'une première extrémité (18) débouchant à travers la paroi périphérique du récipient (2) à un niveau inférieur à celui de l'extrémité ouverte des compartiments et d'une deuxième extrémité (19) débouchant à l'extérieur du dispositif.

3. Dispositif selon l'une des revendications 1 et 2, **caractérisé en ce qu'**il comporte en outre des moyens de remplissage du récipient en fluide cryogénique liquéfié.

4. Dispositif selon la revendication 3, **caractérisé en ce que** les moyens de remplissage comportent une source de fluide cryogénique (A), un tube de remplissage (9) débouchant à l'intérieur du récipient pour alimenter ledit récipient à partir de la source de fluide cryogénique, et des moyens (C, V) de régulation du niveau de fluide cryogénique liquéfié.

5. Dispositif selon la revendication 4, **caractérisé en ce que** le tube de remplissage (9) débouche dans le fond du récipient (2).

6. Dispositif selon la revendication 5, **caractérisé en ce que** le tube se prolonge à l'intérieur du récipient (2) par une portion de tube pourvue de passages (O') de distribution de fluide répartis selon la longueur du tube.

7. Dispositif selon l'une quelconque des revendications 4 à 6, **caractérisé en ce que** les moyens de régulation comportent des moyens de mesure (12, 13, 14 et 15) du niveau de fluide (F) cryogénique liquéfié et des moyens de calcul adaptés pour réguler le niveau de fluide cryogénique liquéfié autour d'au moins une valeur de seuil.

8. Dispositif selon l'une quelconque des revendications 1 à 7, **caractérisé en ce qu'**il comporte une paroi externe (3) délimitant une enceinte dans laquelle est placé le récipient.

9. Dispositif selon la revendication 8, **caractérisé en ce que** le récipient comporte un épaulement (6) monté sur l'extrémité supérieure ouverte de la paroi externe (3).

10. Dispositif selon la revendication 9, **caractérisé en ce qu'**il comporte en outre un couvercle (20) de fermeture pourvu d'un bord périphérique (21) venant en appui contre le récipient (2) et comprenant une partie centrale en saillie s'insérant en position fermée dans une partie supérieure du récipient.

11. Dispositif selon l'une quelconque des revendications 8 à 10, **caractérisé en ce que** le récipient (2) comporte un double fond et comporte une plaque de fond (F) rapportée sur laquelle sont fixés les compartiments.

12. Dispositif selon la revendication 10, **caractérisé en ce que** la plaque de fond est rapportée par vissage.

13. Dispositif selon l'une quelconque des revendications 1 à 12, **caractérisé en ce que** les compartiments comportent des racks de stockage de produits.

14. Dispositif selon l'une quelconque des revendications 1 à 12, **caractérisé en ce que** les produits sont des échantillons de matière biologique.

## Patentansprüche

1. Vorrichtung zur Konservierung von Produkten mittels Gefriertrocknung, umfassend einen Behälter (2), der innen ein Volumen begrenzt, das zu bestimmt ist, mit einem verflüssigten kryogenen Fluid (F) gefüllt zu werden, und Abteile (C1, C2, C3, C4), die dazu bestimmt sind, die Produkte aufzunehmen und jeweils eine dichte periphere Wand umfassen, um die Produkte in dem verflüssigten kryogenen Fluid zu lagern, wobei sich bei der Vorrichtung die Abteile aus einer Bodenzone (4) des Behälters erstrecken, und
**dadurch gekennzeichnet, dass** diese ein offenes oberes Ende (16) umfassen, das die Produkte zugänglich macht, und dadurch, dass die Vorrichtung ein Überlaufsystem (17) umfasst, das geeignet ist, eine Erhöhung des Pegels des verflüssigten kryogenen Fluids bis zum offenen oberen Ende (9) der Abteile zu vermeiden.

2. Vorrichtung nach Anspruch 1,
**dadurch gekennzeichnet, dass** das Überlaufsystem ein Rohr (17) umfasst, das mit einem ersten Ende (18), welches quer durch die periphere Wand des Behälters (2) auf einer Höhe unter jener des offenen Endes der Abteile einmündet, und einem zweiten Ende (19), welches in die Außenseite der Vorrichtung mündet, versehen ist.

3. Vorrichtung nach einem der Ansprüche 1 und 2,
**dadurch gekennzeichnet, dass** diese außerdem Mittel zum Füllen des Behälters mit verflüssigtem kryogenen Fluid umfasst.

4. Vorrichtung nach Anspruch 3,
**dadurch gekennzeichnet, dass** die Füllmittel Füllen eine kryogene Fluidquelle (A), ein Füllrohr (9), das in das Innere des Behälters mündet, um den Behälter von der kryogenen Fluidquelle zu versorgen, und Mittel (C, V) zum Regeln des Pegels des kryogenen Fluids umfassen.

5. Vorrichtung nach Anspruch 4,
**dadurch gekennzeichnet, dass** das Füllrohr (9) in den Boden des Behälters (2) mündet.

6. Vorrichtung nach Anspruch 5,
**dadurch gekennzeichnet, dass** sich das Rohr in das Innere des Behälters (2) durch einen Rohrabschnitt verlängert, der mit Durchgängen (O') zur Verteilung von Fluid versehen ist, die entlang der Länge des Rohrs verteilt sind.

7. Vorrichtung nach einem der Ansprüche 4 bis 6,
**dadurch gekennzeichnet, dass** die Regelungsmittel Mittel (12, 13, 14 und 15) zum Messen des Pegels des verflüssigten kryogenen Fluids (F) und Rechenmittel umfassen, die geeignet sind, den Pegel des verflüssigten kryogenen Fluids um mindestens einen Schwellenwert zu regeln.

8. Vorrichtung nach einem der Ansprüche 1 bis 7,
**dadurch gekennzeichnet, dass** diese eine Außenwand (3) umfasst, die eine Hülle begrenzt, in welcher der Behälter platziert ist.

9. Vorrichtung nach Anspruch 8,
**dadurch gekennzeichnet, dass** der Behälter eine Schulter (6) umfasst, die am oberen offenen Ende der Außenwand (3) montiert ist.

10. Vorrichtung nach Anspruch 9,
**dadurch gekennzeichnet, dass** diese außerdem eine Verschlussabdeckung (20) umfasst, die mit einem peripheren Rand (21) versehen ist, der gegen den Behälter (2) anliegt und einen zentralen vorspringenden Teil umfasst, der in der geschlossenen Position in einen oberen Teil des Behälters eingesetzt wird.

11. Vorrichtung nach einem der Ansprüche 8 bis 10,
**dadurch gekennzeichnet, dass** der Behälter (2) einen doppelten Boden umfasst und eine Bodenplatte (F) umfasst, auf der die Abteile befestigt sind.

12. Vorrichtung nach Anspruch 10,
**dadurch gekennzeichnet, dass** die Bodenplatte eingeschraubt ist.

13. Vorrichtung nach einem der Ansprüche 1 bis 12,
**dadurch gekennzeichnet, dass** die Abteile Gestelle zur Lagerung von Produkten umfassen.

14. Vorrichtung nach einem der Ansprüche 1 bis 12,
**dadurch gekennzeichnet, dass** die Produkte Proben aus einem biologischen Material sind.

## Claims

1. Device for dry cryopreservation of products, comprising a container (2) internally delimiting a volume intended to be filled with a liquefied cryogenic fluid (F), and compartments (C1, C2, C3, C4) that are intended to receive the products and each comprise a leaktight peripheral wall for storing the products away from the liquefied cryogenic fluid, wherein, in said device, the compartments extend from a bottom region (4) of the container, and **characterized in that** they have an open upper end (16) that makes the products accessible, and **in that** the device has an overflow system (17) that is able to prevent the level of liquefied cryogenic fluid from rising as far as the open upper end (9) of the compartments.

2. Device according to Claim 1, **characterized in that** the overflow system comprises a tube (17) provided with a first end (18) the opens out through the peripheral wall of the container (2) at a lower level than that of the open end of the compartments, and with a second end (19) that opens out onto the exterior of the device.

3. Device according to either of Claims 1 and 2, **characterized in that** it also has means for filling the container with liquefied cryogenic fluid.

4. Device according to Claim 3, **characterized in that** the filling means comprise a cryogenic-fluid source (A), a filling tube (9) opening into the interior of the container for feeding said container from the cryogenic-fluid source, and means (C, V) for regulating the level of liquefied cryogenic fluid.

5. Device according to Claim 4, **characterized in that** the filling tube (9) opens into the bottom of the container (2).

6. Device according to Claim 5, **characterized in that** the tube is extended in the interior of the container (2) by a portion of tube that is provided with fluid dispensing passages (O') distributed along the length of the tube.

7. Device according to any one of Claims 4 to 6, **characterized in that** the regulating means comprise means (12, 13, 14 and 15) for measuring the level of liquefied cryogenic fluid (F) and calculating means suitable for regulating the level of liquefied cryogenic fluid around at least one threshold value.

8. Device according to any one of Claims 1 to 7, **characterized in that** it has an outer wall (3) delimiting a chamber in which the container is placed.

9. Device according to Claim 8, **characterized in that** the container has a shoulder (6) mounted on the open upper end of the outer wall (3).

10. Device according to Claim 9, **characterized in that** it also has a closure cover (20) provided with a peripheral edge (21) that rests on the container (2) and comprises a central protruding part that is inserted, in the closed position, into an upper part of the container.

11. Device according to any one of Claims 8 to 10, **characterized in that** the container (2) has a double bottom and has an attached bottom plate (F) to which the compartments are fastened.

12. Device according to Claim 10, **characterized in that** the bottom plate is attached by screwing.

13. Device according to any one of Claims 1 to 12, **characterized in that** the compartments comprise racks for storing products.

14. Device according to any one of Claims 1 to 12, **characterized in that** the products are samples of biological material.
